# EUROPEAN PATENT APPLICATION

(11) **EP 3 037 390 A1**
(43) Date of publication of application: **29.06.2016**
(21) Application number: 14307142.1
(22) Date of filing: 22.12.2014
(51) Int. Cl.: C03B 5/237, C03B 5/235, F27B 3/26, F27D 17/00, F23L 15/04, F28D 21/00

(54) **Optimized process and installation for melting vitrifiable material in a flame fired furnace**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Jarry, Luc, 61270 Beaufai (FR); Joumani, Youssef, 78121 Crespieres (FR); Leroux, Bertrand, 91650 Breuillet (FR); Tsiava, Rémi, 91250 Saint Germain-les-Corbeil (FR); Wagner, Marc, 94100 Saint Maur des Fosses (FR); Beasse, Grégoire, 75014 Paris (FR)
(74) Representative: De Vleeschauwer, Natalie Y.L.D.

(57) **Abstract**

Process for melting vitrifiable material in a flame-fired melting furnace (1), whereby, during a first-high-temperature heat recovery stage, at least one combustion reactant (31, 32) is preheated through indirect heat exchange with the hot flue gas from the furnace (1) and whereby, during a second low-temperature heat recovery stage, the tempered flue gas (21) obtained in the first stage are cleaned and used to heat a working fluid (13) of a Rankine cycle.

## Description

The present invention relates to a method and installation for melting vitrifiable material in a flame-fired furnace, such as, in particular, a flame-fired glass-melting furnace. The present invention relates more specifically to a method and installation for melting vitrifiable material in a furnace heated by combustion of a fuel with an oxygen-rich oxidant optionally complemented with electric boosting.

It is known in the art of flame-fired melting furnaces to add additional heat to the melt by passing an electric current through the melt. This is known as electric boosting. It is typically accomplished by placing molybdenum electrodes in the sidewalls or bottom of the furnace.

Electric boosting makes it possible:
a) to increase the productivity (pull, tonnage) of an existing furnace without increasing atmospheric emissions from the furnace, or
b) reducing emissions from the furnace while maintaining furnace productivity
and this without making major changes to the furnace.

Electric boosting typically provides about 10 to 15 percent of energy requirements in the furnace. For example, for an existing glass-melting furnace operating at 25 percent efficiency and producing 100 tons of glass per day, the addition of electric boosting could increase output to 160 tons per day and efficiency to 35 percent.

Electric boosting can also stabilize the convection currents in the furnace, enabling better mixing and improved homogeneity of the molten product. Electric boosting is in particular used in tank furnaces which melt glass batch with a high proportion of cullet.

By supplying electrical energy to the melt via electrodes, the melt is heated more efficiently: 2 to 3.5 times more efficiently than by supplying the same amount of thermal energy to the furnace by burning fossil fuels.

In general, the furnace operator purchases the electricity used for electric boosting from a power supplier, the cost of the electricity consumed by electric boosting being added to the overall production costs.

Electricity is also consumed by other auxiliary equipment of the melting furnace.

It is also known in the art to generate electricity from the flue gases evacuated from a flame-fired glass-making furnace.

US-A-20090308073 proposes a system for carrying out oxygen-enhanced combustion in an industrial process. The system comprises the industrial process system, an oxygen supply source, a heat recovery unit and an alternative Rankine cycle itself based on a working fluid other than steam. The oxygen supply system supplies oxygen to the industrial process, the industrial process generates waste heat which is sent as a heat source to the heat recovery unit. In the heat recovery unit, the waste heat is transferred to the working fluid of the Alternative Rankine cycle. The alternative Rankine cycle converts the waste heat which has been transferred to the working fluid to power. The power is utilized by the oxygen supply system or by the industrial process or is exported to a utility system. The industrial process may be cement production, steel reheat applications, glass production, aluminum and copper melting, etc. The heat source may be a stream of flue gases generated by the furnace. According to US-A-20090308073, the temperature of the heat source must be lower than 600°C and is preferably between 400°C and100°C.

EP-A-0440085 discloses an integrated process for the production of glass whereby combustion heat is used to melt glass-making materials in a glass-making furnace. The process comprises:
a) Heating glass-making materials in the furnace by the combustion of fuel with an oxygen-enriched oxidant stream.
b) Removing hot flue gas from the furnace and cooling the flue gas by indirect heat exchange with an elevated pressure gas stream in a recuperator, in particular a shell-and-tube type heat exchanger, whereby said gas stream is heated. The heater gas stream is then expanded through a turbine to recover energy therefrom. The expanded gas stream is cooled against an external cooling fluid and recompressed to be used as the elevated pressure gas stream in the recuperator.
c) Further cooling at least a portion of the partially cooled flue gas against the fuel and against at least a portion of the glass-making materials fed to the furnace.
d) Separating carbon dioxide in substantially pure form from the cooled flue gas.
e) Recovering refined glass as a product of the process.

The net power produced by the turbine can be used for electric boosting in the glass-making furnace, in the air separation unit or in the carbon dioxide recovery system or may be exported. Any hot condensibles present in the hot flue gas, such as sodium sulfate, are drained off from the recuperator.

EP-A-1338848 describes a system for recovering thermal energy produced by an oxygen-enriched combustion furnace in which oxidant and fuel gases are combusted thereby producing flue gas. The system according to EP-A-1338848 comprises:
a) a source of oxidant gas having a higher oxygen content than air,
b) at least one heat exchanger system adapted to receive the flue gas and at least one of said oxidant gas and the fuel gas, such that the at least one of said oxidant gas and the fuel gas are heated and the flue gas are cooled,
c) a waste heat boiler adapted to transfer heat from the flue gas to feedwater to produce superheated steam, and
d) a turbine for expansion of the superheated steam and for producing mechanical power therefrom.

According to one embodiment of the system according to EP-A-1338848, mechanical power produced by the steam turbine is transmitted to an electrical generator for producing electric power. The furnace may be a glass-melting furnace.

In the heat exchanger system, the flue gas is cooled from a temperature usually above 1200°C to a temperature from about 500°C to about 1500°C, preferably greater than 1000°C.

According to EP-A-1338848, the temperature of the flue gas exiting the boiler is maintained between 150°C and 400°C and is therefore low enough to allow it to pass through at least one pollution abatement system, such as a baghouse filter, an EXP or a scrubber, in order to keep all emissions within permitted levels, before being sent to the stack.

In one embodiment described in EP-A-1338848, the waste heat boiler includes a flue gas recirculation so that flue gas downstream of an entry of the boiler is diluted and cooled with a portion of cooled flue gas from upstream an exit of the boiler to a temperature of about 550°C. This ensures that all glass particulate is fully solidified before entering the convective heat transfer section.

In an alternative embodiment of the system according to EP-A-1338848, the flow of flue gas is not diluted after entry into the boiler, but instead the heat transfer surfaces in this boiler are cleaned through "shot cleaning", wherein steel balls are rained from the top of the boiler to jar any particulate accumulation loose.

When the furnace is a glass-melting furnace, a heat insulating layer of condensed flue gas components, such as sodium sulfate, builds up on the heating surfaces. After a few days of operation, the layer buildup and the "shot cleaning" reach an equilibrium state wherein the built-up layer maintains its thickness.

In all of the abovementioned known technologies problems arise due to the fact that flue gases from melting furnaces are heavily loaded with condensibles such as, in the case of glass-melting furnaces, sodium sulfate, borates and fluorides, which condense out from the flue gases in the form of solid or sticky deposits which, if left in place lead to increased pressure drops, loss of efficiency and eventually blockages.

In the system according to US-A-20090308073, the temperature of the heat source in the heat recovery unit is within the temperature range in which the above condensibles condense out from glass-furnace flue gases.

US-A-20090308073 does not explain how to prevent or remove deposits of condensibles from the heat recovery units or the conduits leading thereto.

In the process according to EP-A-0440085, condensibles are said to be drained off from the recuperator. As said condensibles form deposits sticking to the heat-exchange surfaces of the recuperator, removal of said condensibles from the recuperator requires the use of mechanical force and the interruption of the recuperator and thus of the heat transfer to the working fluid of the Rankine cycle.

In the first embodiment of the system according to EP-A-1338848, whereby the condensibles in the flue gas are all collected and solidified between the entry of the boiler and the convective heat transfer section of the boiler, boiler operation and therefore also superheated steam production and power generation must intermittently be interrupted in order to remove the solidified condensibles from the boiler and to avoid of partial or complete blockage of the latter.

Even though in the second embodiment of the system according to EP-A-1338848, whereby insulating deposits of condensibles are formed on the heat transfer surface are removed by shot cleaning until an equilibrium is established with a built-up layer of deposits of constant thickness, the boiler can operate without interruption once the equilibrium state is reached, so that continuous power generation is ensured, the efficiency of the heat exchange in the boiler and therefore also of the power generation is significantly impaired by the presence of said heat insulating built-up layer on the heat exchange surfaces of the boiler.

It is an aim of the present invention to provide efficient heat recovery from flue gases from flame-fired furnaces for melting vitrifiable material and this both at flue gas temperatures above the temperature range at which condensibles condense out from the flue gas and at flue gas temperatures below and/or overlapping said temperature range.

It is a further aim of the present invention to provide such a heat recovery process whereby power is generated from heat recovered from the flue gases and whereby said power generation need not be interrupted in order to remove accumulated condensed condensibles from the heat recovery and/or power generation systems.

Uninterrupted power generation is particularly important when the generated power is used for the operation of the melting furnace itself, for example to generate electricity used for electric boosting.

The present invention proposes to achieve said aims by means of a process for melting vitrifiable material in a flame-fired melting furnace, whereby heat is recovered from combustion gases evacuated as hot flue gas from said melting furnace.

The process of the invention comprises a high temperature heat recovery stage and a low temperature heat recovery stage.

In the high temperature heat recovery stage:
i. heat is recovered from hot flue gas evacuated from the furnace in a primary heat exchanger by heat exchange between the hot flue gas and a heat transfer fluid so as to obtain heated heat transfer fluid at a temperature of at least 600°C, preferably of between 600°C and 800°C, and a tempered flue gas at a temperature of at least 880°C, preferably of between 900°C and 1000°C,
ii. at least one combustion reactant selected among oxygen-rich oxidant and fuel is preheated in a secondary heat exchanger by heat exchange between the heated heat transfer fluid and the at least one combustion reactant so as to obtain a preheated combustion reactant and a tempered heat transfer fluid, and.

The one or more preheated combustion reactants thus obtained in the high-temperature heat-recovery stage is/are supplied as combustion reactants(s) to the flame-fired melting furnace.

Throughout the high temperature heat recovery stage, the temperature of the flue gas does not sink below the temperature at which the tempered flue gas leaves the primary heat exchanger.

In this manner precipitation within the primary heat exchanger of condensibles present in the flue gas from the melting furnace is prevented as the temperature of the flue gas remains above the temperature at which these condensibles start condensing out.

In the subsequent low temperature heat recovery stage:
i. condensibles are removed from the tempered flue gas by precipitation, and
ii. heat is recovered from the tempered flue gas.

According to the invention, the heat recovered from the tempered flue gas in the low temperature heat recovery stage is used to heat a working fluid of a Rankine cycle in a tertiary heat exchanger and the Rankine cycle is used to generate mechanical power.

At least part and optionally all of the mechanical power generated by the Rankine cycle is advantageously used to generate electricity. In that case, at least part and optionally all of the electricity thus generated by the Rankine cycle is supplied to electric boost electrodes in the furnace.

Alternatively or in combination with the above, at least part of the mechanical power generated by the Rankine cycle may be used to compress the oxygen-rich oxidant before it is supplied to the furnace, or, if according to the preferred embodiment, the oxygen-rich oxidant is preheated during the high-temperature heat recovery stage, before the preheated oxygen-rich oxidant is preheated. This may be achieved by first transforming at least part of the mechanical energy into electrical energy and supplying at least part of the electrical energy to an oxidant compressor or by directly transferring at least part of the mechanical energy generated by the Rankine cycle to the oxidant compressor.

In the present context, the term "oxygen-rich oxidant" refers to an oxidant having an oxygen content higher than that of air, preferably containing from 50%vol to 100%vol oxygen.

The oxygen-rich oxidant advantageously has an oxygen content of from 80%vol to 100%vol, preferably of at least 90%vol, more preferably of at least 95%vol, most preferably of at least 99%vol.

The term "heat exchange" between two fluids refers to the transfer of heat from one fluid (the heat-source fluid) to a second fluid (the fluid to be heated) without any direct contact or mixing between the two fluids.

The term "heat exchanger" refers to a heating installation or a heating device in which a heat-source fluid, which introduces heat into the heat exchanger, and a fluid to be heated circulate in distinct enclosures or circuits, i.e. without direct contact or mixing between the two fluids, and in which heat is transferred from the heat-source fluid to the fluid to be heated across one or more walls separating the distinct disclosures or circuits.

The term "condensibles" refers to substances present in the furnace flue gases which liquefy or solidify at temperatures in the range from 300°C to 1000°C at pressures in the range of 900 mbar and 1100 mbar. Sodium sulfate, borates and fluorides are examples of such condensibles which may be present in flue gases from a glass-melting furnace.

The term "preheating" refers to the heating of a vitrifiable material or a combustion reactant before it is introduced into the furnace.

In the present context, two elements are "in fluid connection" with one another when they are connected so as to enable a fluid to flow from one of the elements to the other element, typically via one or more fluid transport conduits.

Different types of Rankine cycles may be used in the process according to the invention. The Rankine cycle may, for example, use water/steam as its working fluid. The Rankine cycle may also use an organic fluid, such as n-pentane or toluene, as its working fluid. The nature of the working fluid is typically selected in function of the temperature range in which the Rankine cycle operates.

In order to increase the mechanical power generated by the Rankine cycle, both heat from the tempered heat transfer fluid and the heat recovered from the tempered flue gas may be used to heat the working fluid of the Rankine cycle. Thereto, the tertiary heat-exchanger may, for example, comprise two successive heat exchange units in series, so that, in a first heat exchange unit, the working fluid is partially heated by heat exchange with the tempered heat-transfer fluid and so that, in the second heat-exchange unit the partially heated working fluid is further heated by heat-exchange with the tempered flue gas or vice versa.

The hot flue gas typically enters the primary heat exchanger at a temperature of at least 1100°C, preferably of between 1100°C and 1500°C.

When both combustion reactants are preheated, they can be preheated:
(a) in separate secondary heat exchangers, i.e. a secondary heat exchanger for fuel and a secondary heat exchanges for oxygen-rich oxidant, whereby said secondary heat exchangers may be coupled in series or in parallel, or
(b) in a same secondary heat exchanger designed to preheat these two distinct combustion reactants.

After having been used to preheat the at least one combustion reactant, the tempered heat transfer fluid advantageously leaves the secondary heat exchanger at a temperature of at most 650°C, preferably from 200°C to 650°C.

In the low-temperature heat-recovery stage, condensables may be removed from the tempered flue gas, thereby obtaining clean tempered flue gas, before heat is recovered from said tempered flue gas.

The following methods may be used to remove condensibles from the tempered flue gas : by means of ceramic filters, such as ceramic candles or ceramic packed beds, by means of baghouse filters or by means of electrostatic precipitation (ESP)..

Heat can be recovered from the cleaned flue gas in different ways.

According to a first embodiment, the cleaned flue gas is used directly to heat the working fluid of the Rankine cycle. In that case, heat is recovered from the cleaned flue gas and the working fluid is heated by heat exchange between the cleaned flue gas and the working fluid in the tertiary heat exchanger.

Alternatively, the cleaned flue gas can be used indirectly for the heating of the working fluid via the heat transfer fluid used in the high-temperature heat-recovery stage. In this case, heat is recovered from the cleaned tempered flue gas by heat-exchange between the cleaned flue gas and the tempered heat transfer fluid in a supplementary heat exchanger so as to obtain reheated heat transfer fluid. The working fluid is then heated by heat exchange between the reheated heat transfer fluid and the working fluid in the tertiary heat exchanger.

A second heat transfer fluid may also be used as an intermediate fluid for heating the working fluid by means of the cleaned flue gas. This means that heat is recovered from the cleaned flue gas by heat-exchange between the cleaned flue gas and a second heat transfer fluid so as to obtain a heated second heat transfer fluid. The working fluid is then heated by heat transfer between the heated second heat transfer fluid and the working fluid in the tertiary heat exchanger. A supplementary heat exchanger can be used for the heat-exchange between cleaned flue gas and the second heat transfer fluid.

Instead of removing condensibles from the tempered flue gas before heat is recovered from said tempered flue gas, as described above, it is also possible to remove condensibles from the tempered flue gas by precipitation in an auxiliary heat exchanger while heat is being removed from the tempered flue gas. In that case, the condensibles condense out from the tempered flue gas within the auxiliary heat exchanger and form deposits therewithin as described earlier.

According to a first embodiment of this second option, heat is recovered from the tempered flue gas in the auxiliary heat exchanger by heat exchange between the tempered flue gas and the tempered heat transfer fluid so as to obtain reheated heat transfer fluid. The working fluid is then heated by heat transfer between the reheated heat transfer fluid and the working fluid in the tertiary heat exchanger.

According to a second embodiment of the second option heat is recovered from the tempered flue gas in the auxiliary heat exchanger by heat exchange between the tempered flue gas and a second heat transfer fluid. The working fluid is then heated by heat transfer between the heated second heat transfer fluid and the working fluid in the tertiary heat exchanger.

The auxiliary heat exchanger may comprise two parallel heat exchange units. Heat is recovered from the tempered flue gas in one of the two heat exchange units. When operation of said one of the two heat exchange units is interrupted in order to remove condensed condensibles therefrom, heat is recovered from the tempered flue gas in the other of the two heat exchange units, and so on.

It is also possible to interrupt the operation of the auxiliary heat exchanger in order to remove condensed condensibles therefrom and, during the interruption of the auxiliary heat exchanger, to cause the tempered flue gas to bypass the auxiliary heat exchanger and to heat the working fluid by heat exchange with the tempered flue gas in the tertiary heat exchanger during said period when operation of the auxiliary heat exchanger is interrupted. As the removal of deposits from the auxiliary heat exchanger takes only a short amount of time, the formation of deposits in the tertiary heat exchanger while the auxiliary heat exchanger is being bypassed remains within an acceptable level and does not lead to a substantial lowering of the efficiency of the Rankine cycle.

A further possibility is to interrupt the operation of the auxiliary heat exchanger in order to remove condensed condensibles from the auxiliary heat exchanger and to heat the working fluid by heat exchange between the tempered heat transfer fluid and the working fluid in the tertiary heat exchanger during the period when operation of the auxiliary heat exchanger is interrupted. In this manner, the Rankine cycle continues to generate mechanical power while the operation of the auxiliary heat exchanger is interrupted, even though the level of power generation may be reduced.

The heat transfer fluid or fluids used in the process according to the invention may be gaseous. The heat transfer fluid(s) may advantageously be selected from the group comprising air, CO₂, N₂ or mixtures of at least two of these gases.

A wide range of fuels may be used in the process, such as: natural gas, wood gas, coal gas and syngas, and light or heavy fuel oil.

If fuel is preheated during the high-temperature heat-recovery stage, the fuel may be preheated to a temperature of at least 400°C in the case of gaseous fuels or to a temperature of at least 100°C in case of a liquid fuel. The maximum temperature of preheating is selected so as to avoid deterioration of the fuel (e.g. by cracking).

The oxygen-rich oxidant may have an oxygen content of from 80% vol to 100% vol, preferably of at least 90% vol, more preferably of at least 95% vol and most preferably of at least 99% vol.

Examples of temperature ranges to which a combustion reactant may be preheated in the high temperature heat recovery stage are listed in table 1 below.

**Table 1**

| **Reactant** | **Preheating Temperature [°C]** |
|---|---|
| Oxidant with 70 to 89%vol oxygen | 300°C to 700°C |
| Oxidant with 90 to 100%vol oxygen | 300°C to 650°C |
| Natural gas | 200°C to 550°C |

The present invention is particularly useful for use in glass-melting processes. In that case, the melting furnace is a flame-fired glass-melting furnace, such as a flat-glass furnace or a container-glass furnace. The pull rate of the glass-melting furnace may range from 100 to 800 tons of molten glass per day.

The present invention also relates to installations for melting vitrifiable material adapted for use in the present process.

Such an installation comprises a melting furnace, a primary and secondary heat exchanger and a Rankine cycle including a tertiary heat exchanger.

The flame-fired melting furnace has a flue gas exhaust, at least one fuel inlet and at least one combustion oxidant inlet.

The primary heat exchanger is adapted to heat a first heat transfer fluid by heat exchange with flue gas from the furnace. It has a flue gas inlet, a flue gas outlet, a heat transfer fluid inlet and a heat transfer fluid outlet. The flue gas inlet is in fluid connection with the flue gas exhaust of the furnace. The heat transfer fluid inlet is in fluid connection with a source of a first heat transfer fluid.

The secondary heat exchanger is adapted to preheat a combustion reactant by heat exchange with the first heat transfer fluid coming from the primary heat exchanger. It has a heat transfer fluid inlet, a heat transfer fluid outlet, a reactant inlet and a reactant outlet. The heat transfer fluid inlet is in fluid connection with the heat transfer fluid outlet of the primary heat exchanger. The reactant inlet is in fluid connection with a source of a reactant selected from oxygen-rich oxidant and fuel. When the reactant is fuel, the reactant outlet is in fluid connection with a fuel inlet of the furnace. When the reactant is oxygen-rich oxidant, the reactant outlet is in fluid connection with a combustion oxidant inlet of the furnace.

The Rankine cycle operates with a working fluid and is adapted for generating mechanical power. The Rankine cycle comprises a tertiary heat exchanger having a heat source inlet, a heat source outlet, a working fluid inlet and a working fluid outlet.

According to one embodiment, the installation according to the invention comprises a gas cleaning installation to clean the flue gas leaving the primary heat exchanger. Said gas cleaning installation has a gas inlet and a gas outlet, the gas inlet of the gas cleaning installation being in fluid connection with the flue gas outlet of the primary heat exchanger and the gas outlet of the gas cleaning installation being in fluid connection with the heat source inlet of the tertiary heat exchanger. The gas cleaning installation is adapted to remove condensibles from the flue gas evacuated from the melting chamber. The tertiary heat exchanger is adapted for heating the working fluid by heat exchange with the cleaned flue gas evacuated from the gas cleaning installation via its gas outlet.

Suitable gas cleaning installations for use in accordance with the present invention include baghouse filters, ESPs (electrostatic precipitator), ceramic filters, etc.

An alternative embodiment of the installation according to the invention is designed for being used in the above-described process whereby condensibles are precipitated in an auxiliary heat exchanger. The installation according to said alternative embodiment comprises a melting furnace, a primary heat exchanger, a secondary heat exchanger and a Rankine cycle as described above with respect to the first embodiment. According to said second embodiment, instead of the gas cleaning installation, the installation according to the invention comprises an auxiliary heat exchanger having a flue gas inlet, a flue gas outlet, a heat transfer fluid inlet and a heat transfer fluid outlet. The flue gas inlet of this auxiliary heat exchanger is in fluid connection with the flue gas outlet of the primary heat exchanger.

The heat transfer fluid inlet of the auxiliary heat exchanger is in fluid connection either with the heat transfer fluid outlet of the secondary heat exchanger or with a source of a second heat transfer fluid. The heat transfer fluid outlet of the auxiliary heat exchanger is in fluid connection with the heat source inlet of the tertiary heat exchanger. In this case, the auxiliary heat exchanger is adapted either for reheating the first heat transfer fluid evacuated from the secondary heat exchanger or for heating the second heat transfer fluid supplied by the source of second heat transfer fluid. The tertiary heat exchanger is adapted for heating the working fluid by heat exchange either with the reheated first heat transfer fluid or with the heated second heat transfer fluid.

The source of the first heat transfer fluid may be a reservoir containing heat transfer fluid or an installation generating the first heat transfer fluid, as a main product or as a byproduct.

The source of the first heat transfer fluid is preferably a source of a gaseous heat transfer fluid such as air, for example an air fan/compressor, nitrogen, for example an air separation unit, a nitrogen pipeline or a nitrogen reservoir, or CO₂, for example a CO₂ reservoir or an installation generating CO₂ as a secondary product. It will be appreciated that when the first heat transfer fluid is a gas, it may be stored in a reservoir or transported in a pipeline in liquefied form. Thus the source of gaseous nitrogen or gaseous CO₂, may be a reservoir of liquefied nitrogen, respectively CO₂, whereby the liquefied gas is allowed to evaporate during transport from the reservoir to the heat exchanger.

Similar considerations apply to the second heat transfer fluid and its source.

In an embodiment whereby both combustion reactants are preheated by heat transfer with the first heat transfer fluid in the secondary heat exchanger (or in a set of separate secondary heat exchangers as described above), said secondary heat exchanger (or set of secondary heat exchangers) has a first reactant inlet, a second reactant inlet, a first reactant outlet and a second reactant outlet. The first reactant inlet is in fluid connection with a source of oxygen-rich oxidant and the second reactant inlet is in fluid connection with a source of fuel.

The first reactant outlet is in fluid connection with a combustion oxidant inlet of the furnace and the second reactant outlet is in fluid connection with a fuel inlet of the furnace.

The Rankine cycle is usefully connected to an electricity generator adapted to transform at least part of the generated mechanical power into electricity. In that case, the furnace preferably comprises electrical boost electrodes which are connected to the electricity generator so as to receive electricity therefrom.

As indicated earlier, the installation of the invention is particularly useful when the furnace is a glass-melting furnace.

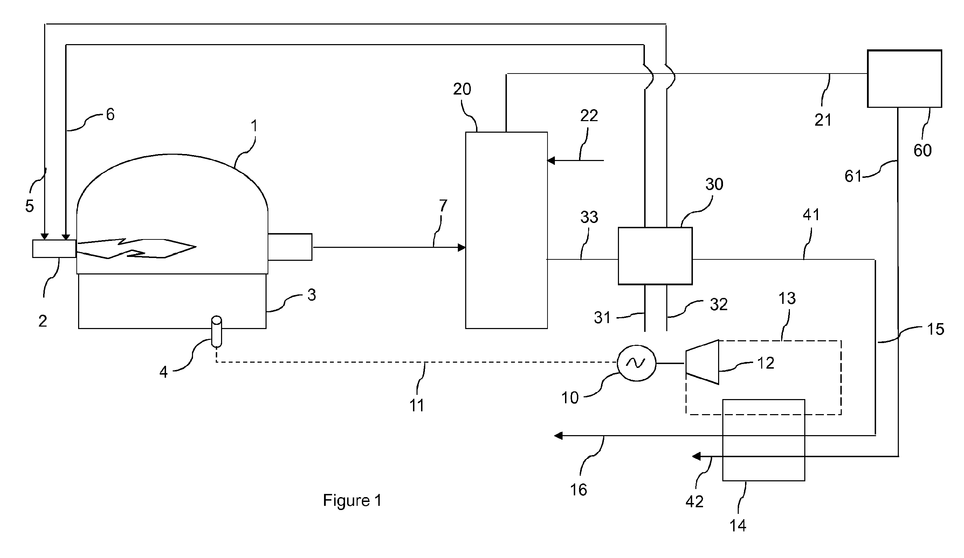

The present invention and its advantageous are illustrated in the following examples, reference being made to figures 1 to 3 which are schematic representations of embodiments of a glass-melting installation according to the present invention.

Figure 1 shows a flame-fired glass-melting furnace 1. Said furnace is equipped with a number of oxy-fuel burners 2 (only one burner is show). The flue gas 7 evacuated from furnace 1 is supplied to the flue gas inlet of primary heat exchanger 20. Simultaneously, a heat transfer fluid 22 (in casu air) is supplied to primary heat exchanger 20 via a heat transfer fluid inlet of the latter.

Inside primary heat exchanger 20, said heat transfer fluid 22 is heated to a temperature of about 700°C by heat exchange with hot flue gases 7.

The heated heat-transfer fluid 33 is evacuated from primary heat exchanger 20 via its heat-transfer fluid outlet and introduced into secondary heat exchanger 30 via the heat-transfer fluid inlet of the latter.

Secondary heat exchanger 30 is a multiflux heat exchanger having an oxidant inlet and an oxidant outlet as well as a fuel inlet and a fuel outlet.

In secondary heat exchanger 30, oxygen-rich oxidant 32 having an oxygen content of from 90% vol to 100% vol and gaseous fuel 31, such as natural gas, are preheated by heat exchange with the hot heat transfer fluid 33. The thus preheated oxygen-rich oxidant 5 and gaseous fuel 6 are supplied to the oxy-burners 2 of the furnace 1 so as to generate combustion and therefore heat within furnace 1, said heat being used to melt solid glass-making materials and generate a glass-melt bath in the glass tank 3 situated in the lower part of furnace 1.

It will be appreciated that, instead of multi-flux heat exchanger 30, it is equally possible to use two distinct secondary heat exchangers (in series or in parallel with respect to the flow of the heat transfer fluid), a first secondary heat exchanger being used to preheat the oxygen-rich oxidant 32, the second secondary heat exchanger being used to preheat the (gaseous) fuel 31.

In accordance with the present invention, the residual heat present in the tempered flue gas 21 leaving the primary heat exchanger 20 is exploited and used to heat a working fluid 13 of a Rankine cycle in tertiary heat exchanger 14.

In the embodiment illustrated in figure 1, the tempered flue gas 21 is sent to a gas cleaning installation 60, such as a set of ceramic candles or packed beds of ceramic balls, in which condensibles are removed from said tempered flue gas with minimal cooling of the flue gas. Ceramic candles can be made of NaHCO₃ and can clean several tens of m³/h of fumes containing NO, NO₂, SO₂, SO₃ and dust particles.

The cleaned flue gas 61 issued from the gas cleaning installation 60 is then sent to the Rankine cycle to heat working fluid 13 thereof. Thereafter, the cooled flue gas 42 is sent to a flue gas treatment installation, if necessary, (not shown) before being sent to the stack (not shown).

By means of the power unit 12 of the Rankine cycle, the heat thus absorbed by working fluid 13 is used to generate mechanical power. Said mechanical power is then transformed into electrical power by electricity generator 10. The electrical power is supplied to the boosting electrodes 4 located in the melt basin 3 of furnace 1 (only a single electrode is shown) so as to provide electric boosting energy to the glass melt, thereby improving the efficiency of the said furnace 1.

In the embodiment illustrated in figure 1, in addition to the cleaned flue gas 61, the tempered heat transfer fluid 41 evacuated from secondary heat exchanger 30 is used as an additional heat source for heating the working fluid 13 of the Rankine cycle, thereby further improving the energy efficiency of the installation.

The cooled heat transfer fluid 16 may thereafter be released into the atmosphere (in particular if the heat transfer fluid 22 is air) or may be recycled back to the primary heat exchanger 20.

An alternative embodiment (not shown) would be to use the cleaned flue gas 61 to reheat the tempered heat transfer fluid 41 in a supplementary heat exchanger and the use the thus reheated heat transfer fluid as a heat source for heating the working fluid 13 of the Rankine cycle. The cooled flue gas leaving the supplementary heat exchanger can then be sent to a flue gas treatment installation (if necessary) before the flue gas is sent to the stack.

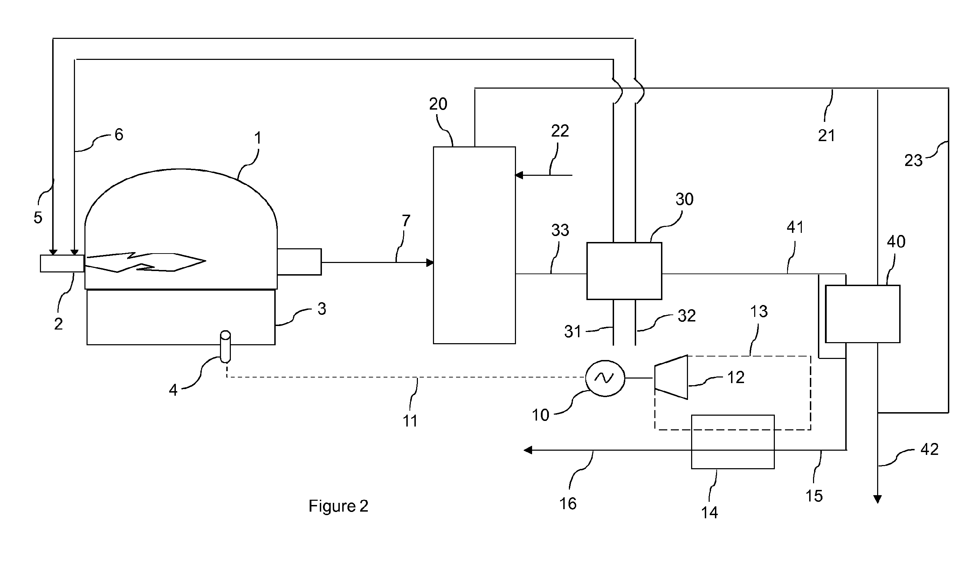

In the embodiment illustrated in figure 2, instead of being sent to a gas cleaning installation, the tempered flue gas 21 is, at least in part and preferably as a whole, sent to auxiliary heat exchanger 40 to reheat the tempered heat transfer fluid 41 evacuated from secondary heat exchanger 30 so as to generate reheated heat transfer fluid 15 which is used as the heat source to heat working fluid 13 of the Rankine cycle in tertiary heat exchanger 14.

Inside auxiliary heat exchanger 40, the flue gas is cooled to within and below the temperature range at which condensibles condense out of the flue gas. These condensibles form deposits within the flue gas circuit of said auxiliary heat exchanger 40. In order to maintain the heat exchange efficiency of auxiliary heat exchanger 40 at a sufficient level, these deposits are periodically removed from heat exchanger 40. During this process, all of the tempered flue gas 21 bypasses the auxiliary heat exchanger 40 as flue gas flow 23.

According to one embodiment, during the removal of the deposits from auxiliary heat exchanger 40, the tempered heat transfer fluid 41 can continue to flow through said heat exchanger 40 (without however being reheated with tempered flue gas 21) before being introduced as a heat source into tertiary heat exchanger 14. If it is not possible or advisable to have the tempered heat transfer fluid 41 to flow through the auxiliary heat exchanger 40 during the removal of the condensibles therefrom, a bypass may be provided so as to direct the tempered heat transfer fluid 41 directly from the heat transfer fluid outlet of secondary heat exchanger 30 to the heat source inlet of the tertiary heat exchanger 14.

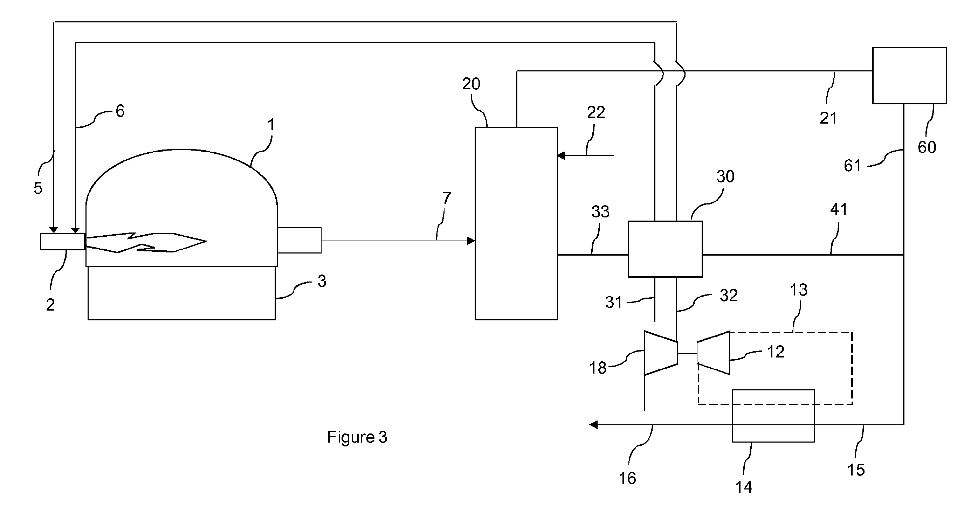

In the embodiment illustrated in figure 3, the cleaned flue gas 61 and the gaseous tempered heat transfer fluid 41 are mixed and the gas mixture 15 is supplied as a heat source to the Rankine cycle. Downstream of the Rankine cycle, the cooled mixture 15 is typically sent to the stack (not shown). In the installation according to figure 3, the Rankine cycle is not connected to an electricity generator.

Instead, the expander 12 of the Rankine cycle is connected by means of a drive shaft to gas compressor 18.

In this manner, the mechanical power generated by the Rankine cycle is used to compress the oxygen-rich oxidant 32 before it is introduced into the secondary heat exchange 30. Indeed, certain sources of oxygen-rich oxidant, such as VSA (Vacuum Swing Adsorption) air separation units, frequently generate oxygen-rich oxidant at a pressure which is too low for the use of said oxygen-rich oxidant as a combustion reactant in the furnace.

It has been found that the present invention makes it possible to use the furnace flue gases not only to enhance the efficiency of the furnace by preheating the combustion reactants, but also to increase the furnace efficiency further by providing at least part and generally all of the electric boosting energy of the melting process and/or of the energy for the compression of the oxygen-rich oxidant.

## Claims

1. Process for melting vitrifiable material in a flame-fired furnace (1), the process comprising:
(a) a high temperature heat recovery stage whereby:
i. heat is recovered from hot flue gas (7) evacuated from the furnace (1) in a primary heat exchanger (20) by heat exchange between the hot flue gas (7) and a heat transfer fluid (22) so as to obtain heated heat transfer fluid (33) at a temperature of at least 600°C, preferably of between 600°C and 800°C, and tempered flue gas (21) at a temperature of at least 880°C, preferably of between 900°C and 1000°C, and
ii. at least one combustion reactant selected among oxygen-rich oxidant (32) and fuel (31) is preheated in a secondary heat exchanger (30) by heat exchange between the heated heat transfer fluid (33) and the at least one combustion reactant (32, 31) so as to obtain a preheated combustion reactant (5, 6) and a tempered heat transfer fluid (41); and
iii. the at least one preheated combustion (5, 6) reactant is supplied to the furnace (1);
(b) a low temperature heat recovery stage whereby:
i. condensibles are removed from the tempered flue gas (21) by precipitation, and
ii. heat is recovered from the tempered flue gas (21, 61),
process whereby the heat recovered from the tempered flue gas (21, 61) and optionally also heat from the tempered heat transfer fluid (41) is used to heat a working (13) fluid of a Rankine cycle in a tertiary heat exchanger (14), and whereby mechanical power is generated by the Rankine cycle.

2. Process according to claim 1, whereby at least part of the mechanical power generated by the Rankine cycle is used to generate electricity.

3. Process according to claim 2, whereby at least part of the electricity generated is supplied to electric boost electrodes (14) in the furnace.

4. Process according to any one of claims 1 to 3, whereby at least part of the mechanical power generated by the Rankine cycle is used to compress the combustion oxidant (32) before the combustion oxidant (32) is supplied to the melting chamber as a combustion reactant or, if the oxygen-rich oxidant (32) is preheated in the secondary heat exchanger (30), before the combustion oxidant (32) is introduced into said secondary heat exchanger (30).

5. Process according to any one of the preceding claims whereby, in the low temperature heat recovery stage, condensibles are removed from the tempered flue gas (21) so as to obtain clean tempered flue gas (61) before heat is recovered from the tempered flue gas (61).

6. Process according to any one of claims 1 to 4, whereby the condensibles are removed from the tempered flue gas (21) by precipitation while heat is removed from the tempered flue gas in an auxiliary heat exchanger.

7. Process according to claim 6, heat is recovered from the tempered flue gas (21) in the auxiliary heat exchanger (40) by heat exchange between the tempered flue gas (21) and the tempered heat transfer fluid (41) so as to obtain reheated heat transfer (15) fluid and whereby the working fluid (13) is heated by heat transfer between the reheated heat transfer fluid (15) and the working fluid (13) in the tertiary heat exchanger (14).

8. Process for melting glass according to any of the preceding claims.

9. Installation for melting vitrifiable material comprising:
(a) a flame-fired melting furnace (1) having a flue gas exhaust, at least one fuel inlet and at least one combustion oxidant inlet,
(b) a primary heat exchanger (20) having a flue gas inlet, a flue gas outlet, a heat transfer fluid inlet and a heat transfer fluid outlet, the flue gas inlet being in fluid connection with the flue gas exhaust of the furnace (1), the heat transfer fluid inlet being in fluid connection with a source of first heat transfer fluid (22), the primary heat exchanger (20) being adapted to heat the first heat transfer fluid (22) by heat exchange with the flue gas (7) from the furnace (1),
(c) a secondary heat exchanger (30) having a heat transfer fluid inlet, a heat transfer fluid outlet, a reactant inlet and a reactant outlet, the heat transfer fluid inlet being in fluid connection with the heat transfer fluid outlet of the primary heat exchanger (20), the reactant inlet being in fluid connection with a source of a reactant selected from oxygen-rich oxidant (32) and fuel (31), the secondary heat exchanger (30) being adapted to preheat the reactant by heat exchange with the first heat transfer fluid (33), whereby, if the reactant is fuel (31), the reactant outlet is in fluid connection with a fuel inlet of the furnace (1) and whereby if the reactant is oxygen-rich oxidant (32), the reactant outlet is in fluid connection with a combustion oxidant inlet of the furnace (1),
(d) a Rankine cycle for generating mechanical power and operating with a working fluid (13) and comprising a tertiary heat exchanger (14) having a heat source inlet, a heat source outlet, a working fluid (13) inlet and a working fluid (13) outlet,
**characterized in that** the installation further comprises a gas cleaning installation (60) having a gas inlet and a gas outlet, the gas inlet of the gas cleaning installation (60) being in fluid connection with the flue gas outlet of the primary heat exchanger (20) and the gas outlet of the gas cleaning installation (60) being in fluid connection with the heat source inlet of the tertiary heat exchanger (14), the gas cleaning installation being adapted to remove condensibles from the flue gas (21) evacuated from the furnace (1) and the tertiary heat exchanger (14) being adapted for heating the working fluid (13) by heat exchange with the cleaned flue gas (61) evacuated from the gas cleaning installation (60).

10. Installation according to claim 9, whereby the Rankine cycle has:
• a heat source inlet in fluid connection with both the gas outlet of the gas cleaning installation (60) and the heat transfer fluid outlet of the secondary heat exchanger (30), or
• two heat source inlets and two heat source outlets, one heat source inlet being in fluid connection with the gas outlet of the gas cleaning installation (60) and the other heat source inlet being in fluid connection with the heat transfer fluid outlet of the secondary heat exchanger (30).

11. Installation for melting vitrifiable material comprising:
(a) a flame-fired melting furnace (1) having a flue gas exhaust, at least one fuel inlet and at least one combustion oxidant inlet,
(b) a primary heat exchanger (20) having a flue gas inlet, a flue gas outlet, a heat transfer fluid inlet and a heat transfer fluid outlet, the flue gas inlet being in fluid connection with the flue gas exhaust of the furnace (1), the heat transfer fluid inlet being in fluid connection with a source of a first heat transfer fluid (22), the primary heat exchanger (20) being adapted to heat the first heat transfer fluid (22) by heat exchange with the flue gas (7) from the furnace (1),
(c) a secondary heat exchanger (30) having a heat transfer fluid inlet, a heat transfer fluid outlet, a reactant inlet and a reactant outlet, the heat transfer fluid inlet being in fluid connection with the heat transfer fluid outlet of the primary heat exchanger (20), the reactant inlet being in fluid connection with a source of a reactant selected from oxygen-rich oxidant (32) and fuel (3), the secondary heat exchanger (30) being adapted to preheat the reactant by heat exchange with the first heat transfer fluid (33), whereby, if the reactant is fuel (31), the reactant outlet is in fluid connection with a fuel inlet of the furnace (1) and whereby if the reactant is oxygen-rich oxidant (32), the reactant outlet is in fluid connection with a combustion oxidant inlet of the furnace (1),
(d) a Rankine cycle for generating mechanical power and operating with a working fluid (13) and comprising a tertiary heat exchanger (14) having a heat source inlet, a heat source outlet, a working fluid inlet and a working fluid outlet, **characterized in that** the installation further comprises an auxiliary heat exchanger (40') having a flue gas inlet, a flue gas outlet, a heat transfer fluid inlet and a heat transfer fluid outlet:
• the flue gas inlet of the auxiliary heat exchanger (40') being in fluid connection with the flue gas outlet of the primary heat exchanger (20)
• the heat transfer fluid inlet of the auxiliary heat exchanger (40') being in fluid connection with (i) the a heat transfer fluid outlet of the secondary heat exchanger (30) or (ii) a source of a second heat transfer fluid,
• the heat transfer fluid outlet of the auxiliary heat exchanger (40') being in fluid connection with the heat source inlet of the tertiary heat exchanger (14);
the auxiliary heat exchanger (40') being adapted for (i) reheating the first heat transfer fluid (41) evacuated from the secondary heat exchanger (30) or (ii) heating the second heat transfer fluid supplied by the source of second heat transfer fluid, and the tertiary heat exchanger (14) being adapted for heating the working fluid by heat exchange with (i) the reheated first heat transfer fluid (13) or (ii) the heated second heat transfer fluid (15).

12. Installation according to one of claims 10 and 11, whereby the source of first heat transfer fluid (22) is a source of a gaseous first heat transfer fluid.

13. Installation according to any one of claims 10 to 12, whereby the Rankine cycle is connected to an electricity generator (10) adapted to transform at least part of the generated mechanical power into electricity, whereby preferably the electricity generator is connected to boosting electrodes of the furnace (1) for supplying electricity thereto.

14. Installation according to any one of claims 10 to 13, whereby the Rankine cycle is connected to a compressor (18) for compressing the oxygen-rich oxidant (32).

15. Installation according to any one of claims 10 to 14, whereby the furnace (1) is a glass-melting furnace
